(19) Europäisches Patentamt
European Patent Office
Office européen des brevets

(11) **EP 3 730 993 B1**

(12) **EUROPEAN PATENT SPECIFICATION**

(45) Date of publication and mention
of the grant of the patent:
**06.09.2023 Bulletin 2023/36**

(21) Application number: **18890318.1**

(22) Date of filing: **20.11.2018**

(51) International Patent Classification (IPC):
*G02B 27/02* (2006.01)     *G02B 17/08* (2006.01)
*H04N 5/64* (2006.01)     *H04N 13/344* (2018.01)
*G02B 27/01* (2006.01)

(52) Cooperative Patent Classification (CPC):
**G02B 27/0172; G02B 27/02; H04N 13/344;**
G02B 2027/013

(86) International application number:
**PCT/JP2018/042814**

(87) International publication number:
**WO 2019/123946 (27.06.2019 Gazette 2019/26)**

(54) **IMAGE DISPLAY DEVICE AND DISPLAY DEVICE**

BILDANZEIGEVORRICHTUNG UND ANZEIGEVORRICHTUNG

DISPOSITIF D'AFFICHAGE D'IMAGE ET DISPOSITIF D'AFFICHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2017   JP 2017246736**

(43) Date of publication of application:
**28.10.2020   Bulletin 2020/44**

(73) Proprietor: **Sony Group Corporation**
**Tokyo 108-0075 (JP)**

(72) Inventor: **ITONAGA, Kazuichiro**
**Tokyo 108-0075 (JP)**

(74) Representative: **D Young & Co LLP**
**120 Holborn**
**London EC1N 2DY (GB)**

(56) References cited:
WO-A1-2008/156675     WO-A1-2010/047212
WO-A1-2015/136258     WO-A1-2016/033317
JP-A- H07 104 209     JP-A- 2002 311 381
US-A- 5 715 094     US-A1- 2008 309 586
US-A1- 2015 054 734     US-A1- 2017 075 113
US-A1- 2017 227 764     US-B1- 8 384 999
US-B1- 9 638 836

**Description**

TECHNICAL FIELD

The present disclosure relates to an image display device and a display device provided with the image display device and, particularly, to a display device constituting a head mounted display (HMD) and an image display device suitable for incorporation into the display device.

BACKGROUND ART

In recent years, so-called virtual reality (VR) goggles or VR glasses have been earnestly developed. The VR goggles include a pair of flat display devices arranged to face both eyes of an observer (for example, see Japanese Patent Application Laid-Open No. 2017-183763), and the pair of flat display devices is implemented by a display of a portable terminal such as one smart phone. That is, an image for the right eye and an image for the left eye are displayed in the display of the portable terminal such as one smart phone. Further, in the VR goggles or the like, for example, a flat display device having a diagonal size of 4 inches is used in order to address the need for a wide angle, and a glass substrate is often used to reduce the manufacturing cost of the flat display device having such a size. However, in the flat display device using such a glass substrate, it is difficult to improve the performance of a transistor constituting a pixel circuit for displaying an image and a peripheral circuit for signal processing. Further, as compared with the semiconductor fine processing technology, it is difficult to miniaturize pixels.

US 2017/075113 A1 discloses an on-board head-up display device.

US 9638836 B1 discloses a lens including a material spanning an area and providing an inside reflective three-dimensional (3D) surface.

US 8384999 B1 discloses an optical module for head mounted displays.

WO 2008/156675 A1 discloses focusing a projected image with a multiple rotationally symmetric aspheric surfaces and an ellipsoidal reflector-relay onto or in a user's eye.

CITATION LIST

PATENT DOCUMENT

Patent Document 1: Japanese Patent Application Laid-Open No. 2017-183763

SUMMARY OF THE INVENTION

PROBLEMS TO BE SOLVED BY THE INVENTION

In order to improve the performance of a transistor used in a pixel circuit and a peripheral circuit, it is necessary to use a silicon substrate; however, there is a problem that manufacturing such a flat display device having a large area is expensive. Further, as described later, there is another problem that since a pair of flat display devices is used, the range of an image viewed by the right eye is different from the range of an image viewed by the left eye.

Accordingly, a first object of the present disclosure is to provide an image display device that can be manufactured inexpensively, and a display device using the image display device. Further, a second object of the present disclosure is to provide an image display device having a configuration and structure in which little difference occurs between the range of an image viewed by the right eye and the range of an image viewed by the left eye, and a display device using the image display device. Furthermore, a third object of the present disclosure is to provide a light-reflecting member capable of improving the performance of an image display device according to a first aspect of the present disclosure.

SOLUTIONS TO PROBLEMS

An image display device according to a first aspect of the present disclosure is described in claim 2. A light-reflecting member according to the present invention is disclosed in claim 1.

BRIEF DESCRIPTION OF DRAWINGS

Figs. 1A and 1B are a conceptual diagram of an image display device of Example 1 and a conceptual diagram of a light-reflecting element constituting the image display device of Example 1.

Fig. 2 is a conceptual diagram of a display device of Example 1.

Figs. 3A and 3B are conceptual diagrams of a modification to a light-reflecting element constituting the image display device of Example 1.

Fig. 4 is a conceptual diagram of an image display device of Example 2.

Fig. 5 is a conceptual diagram of a display device of Example 2.

Fig. 6 is a conceptual diagram of an image display device of Example 1 or Example 2.

Fig. 7 is a conceptual diagram of a display device of Example 1 or Example 2.

Fig. 8 is a conceptual diagram of a conventional display device.

Fig. 9 is a conceptual diagram of a conventional display device.

Fig. 10 is a schematic diagram of a state where light emitted from first optical means forms an image on a light-reflecting element in a case where the first optical means and an image forming device are disposed in a mutually non-parallel state.

Fig. 11 is a schematic diagram of a state where light emitted from first optical means forms an image near a light-reflecting element in a case where the first optical means and an image forming device are disposed in a mutually parallel state.

Fig. 12 is a conceptual diagram of an image display device including an imaging device.

MODE FOR CARRYING OUT THE INVENTION

Hereinafter, the present disclosure is described below on the basis of examples with reference to the drawings; however, the present disclosure is not limited to examples, and various numerical values and materials in examples are exemplifications. Note that the description is provided in the following order.

1. General description of image display devices according to first to second aspects of the present disclosure, display devices according to the first to second aspects of the present disclosure, and a light-reflecting member of the present disclosure

2. Example 1 (the image display device according to the first aspect of the present disclosure, the display device according to the first aspect of the present disclosure, and the light-reflecting member of the present disclosure)

3. Example 2 (the image display device according to the second aspect of the present disclosure and the display device according to the second aspect of the present disclosure)

4. Other

<General description of image display devices according to first to second aspects of the present disclosure, display devices according to the first to second aspects of the present disclosure, and a light-reflecting member of the present disclosure>

The image display device according to the first aspect of the present disclosure and a first image display device and a second image display device constituting the display device according to the first aspect of the present disclosure are sometimes collectively called an "image display device and the like according to the first aspect of the present disclosure", and the image display devices according to the first to second aspects of the present disclosure and the first image display device and the second image display device constituting the display device according to the first to second aspects of the present disclosure are sometimes collectively called an "image display device and the like of the present disclosure". The image forming device, the first image forming device, and the second image forming device are sometimes collectively called an "image forming device and the like", the light-reflecting member, a first light-reflecting member, and a second light-reflecting member are sometimes collectively called a "light-reflecting member and the like", and a light-reflecting element, a first light-reflecting element, and a second light-reflecting element are sometimes collectively called a "light-reflecting element and the like".

Let an X-axis be a straight line including a line segment connecting the centers of rotation of the right and left eyeballs, an X-axis direction be a direction in which the X-axis extends, a Y-axis be a straight line that is a perpendicular bisector of the line segment connecting the centers of rotation of the right and left eyeballs and is parallel to a straight line passing through the centers of rotation of both the eyeballs, and, a Y-axis direction be a direction in which the Y-axis extends. Alternatively, the Y-axis direction is parallel to a pupillary axis defined by a straight line that passes through the center of entrance pupil of the eyeball and is perpendicular to the corneal surface. Let a Z-axis be an axis orthogonal to the X-axis and the Y-axis. It can be said that the light-reflecting member and the like are disposed on a virtual plane parallel to the XY-plane as a whole; however it is possible that the first light-reflecting member and the second light-reflecting member are not disposed on a virtual plane parallel to exactly the same XY-plane. The first image display device and the second image display device are arranged symmetrically with respect to the YZ-plane. In a case where the horizontal direction (X-axis direction) and the vertical direction (Y-axis direction) are defined with an observer as the reference, the first direction is defined to be parallel to the X-axis direction and the second direction is defined to be parallel to the Y-axis direction. However, the first direction and the second direction are not limited to the definition, and may be any direction essentially.

In the display device according to the first to second aspects of the present disclosure, an arrangement is possible in which the first image display device and the second image display device are housed in a housing, and a partition plate is disposed between a region of the housing in which the first image display device is housed and a region of the housing in which the second image display device is housed. Providing the partition plate makes it possible to reliably prevent light emitted from the first image forming device from colliding with the second light-reflecting member constituting the second image display device, and to reliably prevent light emitted from the second image forming device from colliding with the first light-reflecting member constituting the first image display device.

In the image display device and the like according to the first aspect of the present disclosure including the preferable arrangement described above, a facing surface of the light-reflecting member and the like (or the light-reflecting member and the like) may be curved concavely toward the observer. The similar thing is applicable to the image display device according to the second aspect of the present disclosure and the first image display device and the second image display device constituting the display device according to the second aspect of the present disclosure.

Then, in such an arrangement, the facing surface of the light-reflecting member and the like may include a part of a spherical surface, a part of an aspherical surface, or a part of a cylindrical surface. Note that the cylindrical surface is a figure (face) resulting from one rotation, with a line segment extending in the Y-axis direction used as the axis of rotation, of another line segment parallel to the axis of rotation. The cylindrical surface also includes a figure (face) resulting from one rotation, with a line segment used as the axis of rotation, of another curve. Here, as that another curve, a curve can be exemplified which is obtained when the aspherical surface is cut along a virtual plane including the central axis of the aspherical surface. The similar thing is applicable to the image display device according to the second aspect of the present disclosure and the first image display device and the second image display device constituting the display device according to the second aspect of the present disclosure.

The shape of an orthographic projection image of the light-reflecting member and the like can be a rectangle such as a square, oblong, or a rhombus, a polygon including a regular polygon such as a regular hexagon or a regular octagon, a circle, or an ellipse. Here, the rectangle and the polygon include a rectangle and a polygon whose vertexes (corners) are rounded, a rectangle and a polygon whose sides are rounded (for example, sides are arcs or circular arcs), and also a rectangle and a polygon whose sides are rounded (sides are arcs or circular arcs) and vertexes (corners) are rounded. The size of the orthographic projection image of the light-reflecting member and the like can be exemplified by $r_0$ = 10 mm to 100 mm when expressed by a radius $r_0$ assuming a circle equal to the area of the orthographic projection image of the light-reflecting member and the like. In a case where a part of the spherical surface constitutes the light-reflecting member and the like, the curvature radius $r_1$ of the spherical surface may be exemplified by $r_0$ to $3r_0$, and in a case where a part of the aspherical surface constitutes the light-reflecting member and the like, the curvature radius $r_1$ at the center of the light-reflecting member and the like may be exemplified by $r_0$ to $3r_0$. In a case where a part of the cylindrical surface constitutes the light-reflecting member and the like, the distance $D_1$ from the axis of rotation to another line segment or curve may be exemplified by $r_0$ to $3r_0$. Note that, as described above, the axis of rotation and that another line segment are parallel to each other, and a tangent of that another curve at a point farthest from the axis of rotation is parallel to the axis of rotation. A distance between the axis of rotation and the tangent is denoted by the distance $D_1$ from the axis of rotation to another curve. The similar thing is applicable to the image display device according to the second aspect of the present disclosure and the first image display device and the second image display device constituting the display device according to the second aspect of the present disclosure.

Further, in the image display device and the like according to the first aspect of the present disclosure including the preferable arrangement described above, the light-reflecting element and the like may include a columnar member through which light constituting a minute region of an image emitted from the image forming device and the like enters and is emitted, and a material (referred to as a "second material" for convenience) having a refractive index lower than that of a material (referred to as a "first material" for convenience) constituting the columnar member may be filled between the light-reflecting element and the like and the light-reflecting element and the like. Then, in this case, the cross-sectional shape when the columnar member is cut along a virtual plane orthogonal to the axis of the columnar member may be a rectangle such as a square, an oblong, or a rhombus, a polygon including a regular polygon such as a regular hexagon or a regular octagon, a circle, or an ellipse; however, it is not limited to these shapes. When the light constituting the minute region of the image emitted from the image forming device and the like enters the columnar member, the light (for convenience, called "incident light") is reflected by a side surface and a bottom surface of the columnar member and is emitted from the columnar member toward a pupil of the observer [this light (for convenience, called "emitted light")]. Such a columnar member has a structure similar to that of eyes of a mantis. In a case where the refractive index of the first material is denoted by $n_1$ and the refractive index of the second material is denoted by $n_2$, the relationship

$$n_1 > n_2$$

is satisfied, and it is preferable to select ($n_1$, $n_2$) so that the incident light is totally reflected by the side surface of the columnar member. Examples of the first material include cycloolefin polymer (COP) resin (for example, ZEONEX resin [registered trademark] manufactured by Zeon Corporation), amorphous polyolefin (APO), and heat-resistant transparent resin (for example, ARTON resin [registered trademark] manufactured by JSR Corporation), and examples of the second material include polyolefin-based resin (for example, TPX [registered trademark] manufactured by Mitsui Chemicals Inc.), acrylic resin including polymethylmethacrylate (PMMA) resin, and inorganic material (for example, $SiO_2$), and the second material may be air. The light-reflecting layer is preferably formed on the bottom surface of the columnar member. Alternatively, the light-reflecting layer is preferably formed in a region of the facing surface of the light-reflecting member and the like which is in contact with the bottom surface of the columnar member. An anti-reflection layer may be formed in a region of the facing surface of the light-reflecting member and the like which is not in contact with the bottom surface of the columnar member. As a method for manufacturing the columnar member, or, alternatively, as a method for forming the columnar member on the facing surface of the light-reflecting member and the like, a nanoimprint method, an injection molding method, and an inkjet method can be exemplified. In addition, the light-reflecting member formed in a planar state can be curved in a later step.

Alternatively, in the image display device and the like according to the first aspect of the present disclosure including the preferable arrangement described above, the light-reflecting element and the like may include a smooth convex portion through which the light constituting the minute region of the image emitted from the image forming device and the like enters and is emitted. Alternatively, in the image display device and the like according to the first aspect of the present disclosure including the preferable arrangement described above, the light-reflecting element and the like may include a smooth concave portion from which the light constituting the minute region of the image emitted from the image forming device and the like is reflected. Examples of the shape of the convex portion or the concave portion include a part of a sphere, a part of a cylinder, a shape inclined in a certain direction (a factory roof shape), and a cylindrical shape; however, it is not limited thereto. When the light constituting the minute region of the image emitted from the image forming device and the like enters the convex portion or the concave portion, the light (incident light) is reflected by the bottom surface of the convex portion or the concave portion, is emitted from the convex portion or the concave portion toward the pupil of the observer as emitted light, and is reflected. It is only required that the specific shape of the convex portion or the concave portion has a shape which enables such incident light and emitted light to be obtained. The light-reflecting layer is preferably formed on the bottom surface of the convex portion. Alternatively, the light-reflecting layer is formed in a region of the facing surface of the light-reflecting member and the like which is in contact with the bottom surface of the convex portion. Examples of a method for producing the convex portion or the concave portion or a method for forming the convex portion or the concave portion on the facing surface of the light-reflecting member and the like include a nanoimprint method, an injection molding method, and an ink jet method.

It is only required that the material constituting the light-reflecting layer is basically any material that reflects visible light, and examples thereof include silver, aluminum, and barium sulfate paint.

Further, in the image display device and the like of the present disclosure including the various preferable arrangements and configurations described above, first optical means for enlarging an image emitted from the image forming device and the like may be disposed between the image forming device and the like and the light-reflecting member and the like. Examples of the first optical means include an optical system having a lens group in which a final-stage lens is disposed at a short distance (for example, within 1 mm) from the image display device and the like. It is preferable that the distance between the image display device and the like and the final-stage lens be shorter. Accordingly, a larger amount of light emitted from the image display device and the like can be made incident on the lens group, and the luminous flux of light passing through the first optical means increases, thereby increasing the luminance. The first optical means constituting the image display device, the first optical means constituting the first image display device, and the first optical means constituting the second image display device are sometimes collectively called "first optical means and the like" below.

Note that it is preferable that the first optical means and the like and the image forming device and the like are arranged in a mutually non-parallel state, that is, the optical axis of the first optical means and the like and the direction of the light emitted from the center of the image forming device and the like are preferably in a non-parallel state from the viewpoint that the light emitted from the first optical means and the like easily forms an image on the light-reflecting element and the like. Specifically, for example, it is only required that the Scheimpflug principle is used to achieve focus on the facing surface of the light-reflecting member.

Further, in a case where an opening diameter of the first optical means and the like is denoted by "ss'", a coefficient (1.2 or more and 2.0 or less) is denoted by "a", a distance from the center of the light-reflecting member and the like to an opening position of the first optical means and the like is denoted by "f'", and the wavelength of incident light entering the first optical means and the like from the image forming device and the like is denoted by "λ", it is desirable to satisfy the relationship of

$$ss' = a(f' \cdot \lambda)^{1/2},$$

which makes it easy to achieve focus even on the light-reflecting member and the like having a curved shape and to relax the restriction on the shape of the light-reflecting member and the like, thereby making it easy to reduce the size of the first optical means and the like, for example.

Further, particularly, in a case where the light-reflecting member and the like are caused to have a curved surface, it is desirable that the first optical means is a so-called f$\theta$ fish-eye lens system. That is, it is preferable to use a fish-eye lens system of a projection method (equisolid angle projection) satisfying y = f$\theta$, where y denotes the image height, f denotes the focal length, and $\theta$ denotes the half angle of view.

Further, the image display device and the like of the present disclosure may include an imaging device having an optical system of the same type as the lens system of the first optical means. Then, an image captured by the imaging device may be displayed on the image forming device and the like, that is, the captured image may be reproduced as-is by the image forming device.

Further, in the image display device and the like of the present disclosure including the various preferable arrangements and configurations described above, second optical means for converging light emitted from the light-reflecting member and the like on the pupil of the observer may be disposed between the light-reflecting member and the like and the observer. The light constituting the minute region of the image emitted from the image forming device and the like enters the light-reflecting element and the like, and is emitted from the light-reflecting element and the like toward the pupil of the observer, and specifically, the light is emitted toward the second optical means, and the light emitted from the second optical means is incident (converged) on the pupil of the observer. Examples of the second optical means include a convex lens and a convex lens system. Alternatively, a meniscus lens system in which a convex lens and a concave lens are combined may be exemplified, and a Fresnel lens system may be exemplified as the convex lens. The second optical means constituting the image display device, the second optical means constituting the first image display device, and the second optical means constituting the second image display device are sometimes collectively called "second optical means and the like" below.

Further, in the image display device and the like of the present disclosure including the various preferable arrangements and configurations described above, an image emitted from the image forming device and the like may be projected on the entire facing surface of the light-reflecting member and the like. With such an arrangement, a kind of frame-like region surrounding the image is not visually recognized by the observer who observes the image emitted from the image forming device and the like, which results in a so-called frameless state, and enables the observer to view the image with high realistic feeling.

Further, in the image display device and the like of the present disclosure including the various preferable arrangements and configurations described above, when light emitted from the image forming device and the like enters the light-reflecting element and the like and is emitted from the light-reflecting element and the like, the sign of a vector of the light entering the light-reflecting element and the like (denoted by "incidence $k^v_{in}$") and the sign of a vector of the light emitted from the light-reflecting element and the like (denoted by "emission $k^v_{out}$") may be opposite to each other. In other words,

it is preferable to satisfy the relationship
$k^v_{in} + k^v_{out} = 0$. By adopting such an arrangement, the light constituting the minute region of the image emitted from the image forming device and the like enters the light-reflecting element and the like, and is reliably emitted from the light-reflecting element and the like toward the pupil of the observer. Note that in the incident vector and the emission vector in each light-reflecting element and the like, coordinate axes in each light-reflecting element and the like are used as the reference. Here, in a case where, in each light-reflecting element, light that has entered the light-reflecting element collides with a certain surface and changes the direction to the emission direction, the coordinate axes are ($x_0$-axis, $y_0$-axis, $z_0$-axis) where a normal line at the center of a certain surface is defined as $z_0$-axis, an axis that is orthogonal to the $z_0$-axis and is on the certain surface parallel to the X-axis is defined as $x_0$-axis, and an axis on the certain surface orthogonal to the $x_0$-axis and the $z_0$-axis is defined as $y_0$-axis.

Further, the image display device and the like of the present disclosure including the various preferable arrangements and configurations described above may be housed in the housing. Then, in this case, an anti-reflection member may be disposed on the inner surface of the housing including the partition plate. Examples of the material constituting the anti-reflection member include velvet (cloth) and vantablack (paint) or the like using carbon nanotubes. In a case where two image display devices are housed, the housing includes, with respect to the observer, at least a top surface member, a first side member (located on one ear side of the observer), a second side member (located on the other ear side of the observer. Note, located on the nose side of the observer in a case where one image display device is housed), a facing surface member that faces the observer and has an opening portion, a front member opposed to the facing surface member, and further, preferably a lower surface member. These members are preferably integrally assembled. The light-reflecting member and the like are attached to the front member. Further, the image forming device and the like and the first optical means and the like are attached to the top surface member, the side member, the facing surface member, or the vicinity thereof. The second optical means and the like are attached to the facing surface member. Examples of the material constituting the housing including the partition plate include a metallic material and a plastic material. The observer cannot view the outer field through the light-reflecting member and the like. That is, the image display device is a non-transparent display device.

Further, the image display device and the like of the present disclosure including the various preferable arrangements and configurations described above can be configured to be worn on the head of the observer. Means and method for wearing the image display device and the like on the head of the observer may be well-known means and methods.

The light-reflecting member and the like can be made from a plastic material for example, and specific examples thereof include acrylic resin including PMMA, polycarbonate resin, a laminated structure of polycarbonate resin and acrylic resin, cycloolefin polymer, amorphous polypropylene resin, and styrene resin including AS resin, alternatively, polyethylene terephthalate resin, polyethylene naphthalate resin, cellulose ester resin such as cellulose acetate, fluoropolymer resin such as polyvinylidene fluoride or copolymer of polytetrafluoroethylene and hexafluoropropylene, polyether resin such as polyoxymethylene, polyacetal resin, polystyrene resin, polyethylene resin, polypropylene resin, polyolefin resin such as methylpentene polymer, polyimide resin such as polyamide imide or polyether imide, polyamide resin, polyether sulfone resin, polyphenylene sulfide resin, polyvinylidene fluoride resin, tetraacetyl cellulose resin, brominated phenoxy resin, polyarylate resin, and polysulfone resin. As described above, it is preferable that the light-reflecting layer is formed in the region of the facing surface of the light-reflecting member and the like which is in contact with the bottom surface of the columnar member or the bottom surface of the convex portion. Further, the anti-reflection layer may be formed in a region of the facing surface of the light-reflecting member and the like which is not in contact with the bottom surface of the columnar member or the bottom surface of the convex portion.

In the image forming device and the like, a monochrome image can be displayed and a color image can be displayed.

An arrangement is possible in which the image forming device and the like include a plurality of pixels arrayed in a two-dimensional matrix. Such an image forming device is referred to as an "image forming device having a first configuration" for convenience.

Examples of the image forming device having the first configuration can include: an image forming device including a reflective spatial light modulation device and a light source; an image forming device including a transmissive spatial light modulation device and a light source; and an image forming device including a light emitting element such as an organic electro luminescence (EL), an inorganic EL, a light emitting diode (LED), or a semiconductor laser element, and among them, the image forming device having the first configuration is preferably the image forming device including the organic EL light emitting element (organic EL display device) or the image forming device including the reflective spatial light modulation device and the light source. Examples of the spatial light modulation device can include a light valve, for example, a transmissive or reflective liquid crystal display device such as liquid crystal on silicon (LCOS), and a digital micromirror device (DMD), and examples of the light source can include a light emitting element. Moreover, a configuration can be made in which the reflective spatial light modulation device includes a liquid crystal display device and a polarization beam splitter that reflects a part of light from the light source to guide the light to the liquid crystal display device, and causes a part of light reflected by the liquid crystal display device to pass and guide the part of light to the light-reflecting member. Alternatively, configuring from a projector displaying three primary colors is possible. Examples of the light emitting element constituting the light source can include a red light emitting element, a green light emitting element, a blue light emitting element, a white light emitting element. Alternatively, white light may be obtained by mixing red light, green light, and blue light respectively emitted from a red light emitting element, a green light emitting element, and a blue light emitting element, and performing brightness equalization, by using a light pipe. As the light emitting element, a semiconductor laser element, a solid state laser, and an LED can be exemplified, for example. The number of pixels only needs to be determined on the basis of specifications required for the image display device, and as specific values of the number of pixels, 320 × 240, 432 × 240, 640 × 480, 1024 × 768, 1920 × 1080, 3840 × 2160, 7680 × 4320, and the like can be exemplified. However, the image projected on the light-reflecting member is a part thereof in some cases. In the case of color image display, the number of sub-pixels has a relationship of, for example, as three times (RGB), four times (RGBW), or five times (RGBBW or the like) as the number of pixels. The similar thing applies to the following description. Note that "R", "G", "B", and "W" mean a sub-pixel that emits red light, a sub-pixel that emits green light, a sub-pixel that emits blue light, and a sub-pixel that emits white light, respectively.

Alternatively, the image forming device and the like may include a light source and scanning means for forming an image by scanning light emitted from the light source. Such an image forming device is referred to as an "image

7

forming device having a second configuration" for convenience.

Examples of the light source in the image forming device having the second configuration can include a light emitting element, and specifically, can include a red light emitting element, a green light emitting element, a blue light emitting element, a white light emitting element, or alternatively, white light may be obtained by mixing red light, green light, and blue light respectively emitted from a red light emitting element, a green light emitting element, and a blue light emitting element, and performing brightness equalization, by using a light pipe. As the light emitting element, a semiconductor laser element, a solid state laser, and an LED can be exemplified, for example. The number of pixels (virtual pixels) in the image forming device having the second configuration also only needs to be determined on the basis of the specifications required for the image display device, and as specific values of the number of pixels (virtual pixels), $320 \times 240$, $432 \times 240$, $640 \times 480$, $1024 \times 768$, $1920 \times 1080$, $3840 \times 2160$, $7680 \times 4320$, and the like can be exemplified. Furthermore, in a case where color image display is performed and the light source includes a red light emitting element, a green light emitting element, and a blue light emitting element, it is preferable to perform color synthesis by using, for example, a cross prism. Examples of the scanning means can include a galvanometer mirror, and micro electro mechanical systems (MEMS) mirror including a micromirror rotatable in two dimensions, which horizontally and vertically scans light emitted from a light source.

In a case where the light-reflecting element and the like include the columnar member, an area of the cross-sectional shape when the columnar member is cut along a virtual plane orthogonal to the axis of the columnar member is denoted by $S_0$, in a case where the light-reflecting element and the like include the convex portion, an area of the bottom surface of the convex portion is denoted by $S_0$, and in a case where the light-reflecting element and the like include the concave portion, when an area of the region surrounded by the concave edge portion on the top surface of the concave portion is denoted by $S_0$, and when expressed with the length $Lg_0$ of one side of a square assuming the square equal to the area $S_0$, as the length $Lg_0$ of one side of the square, 1 um to 0.1 mm can be exemplified. In a case where a relationship between the total number of light-reflecting element and the like and the number of pixels of the image forming device and the like is expressed by

$$\text{(Total number of light-reflecting element and the like)} = K \times \text{(the number of pixels of image forming device and the like),}$$

the value of K can be 0.1 to 10, for example. In addition, in an effective region of the light-reflecting member and the like, it is preferable that the light-reflecting element and the like are formed as densely as possible, without any space if possible. The light constituting the minute region of the image emitted from the image forming device and the like enters the light-reflecting element and the like, and the minute region of the image corresponds to a pixel or a sub-pixel. Alternatively, it is preferable that the size of the light-reflecting element and the like is so set as not to be visually recognized by the observer.

The foregoing description of the image forming device and the like is applicable to the image display device according to the second aspect of the present disclosure, and the first image display device and the second image display device constituting the display device according to the second aspect of the present disclosure.

The image emitted from the image forming device and the like is transformed in advance on the basis of a well-known technology so as to become a desired image when the image finally reaches the pupil of the observer. Specifically, for example, it is only required to emit such an image as viewed through a fish-eye lens may be emitted from the image forming device and the like.

The positional relationship between the image forming device and the like, the light-reflecting member and the like, and the second optical means and the like is determined. By using this, for example, when light emitted from the image forming device and the like is applied to a certain light-reflecting element (called "light-reflecting element-A" for convenience), the light is split into light (called "light-A" for convenience) reaching the second optical means via the light-reflecting element-A and the other light (called "light-B" for convenience), and the light-B enters a light-reflecting element-B different from the light-reflecting element-A, which possibly occurs although slightly. In such a case, the luminance and chromaticity of the light emitted from the image forming device and the like and entering the light-reflecting element-B are determined and controlled in consideration of the incidence of the light-B on the light-reflecting element-B; thereby, the light reaching the second optical means via the light-reflecting element-B can be controlled more accurately.

In the image display device and the display device of the present disclosure, a signal for displaying an image in the image forming device can be received from outside. Information or data regarding an image displayed in the image forming device is, for example, recorded, stored, or saved in a so-called cloud computer or server, since the image display device or the display device is provided with communication means, for example, a mobile phone or a smartphone, or since the image display device or the display device is combined with the communication means, various information and data can be sent/received or exchanged between the cloud computer or the server and the image display device or the display device, and a signal based on various information and data, that is, a signal for displaying an image in the image forming device can be received. Alternatively, an arrangement is possible in which a signal for displaying an image in the image forming device is stored in the image display device or the display device. An image displayed in the image forming device includes various information and various data. Alternatively, the display device may include a camera (imaging device), and an image captured by the camera may be analyzed and reflected in an image displayed in the image forming device. The image to be displayed in the image forming device is essentially arbitrary and can be any image.

Example 1

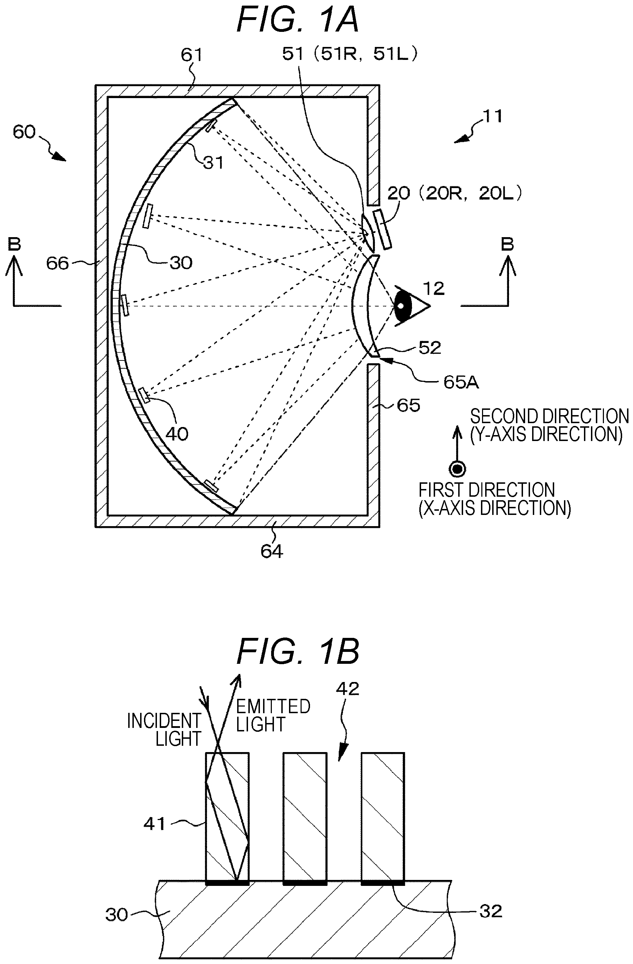

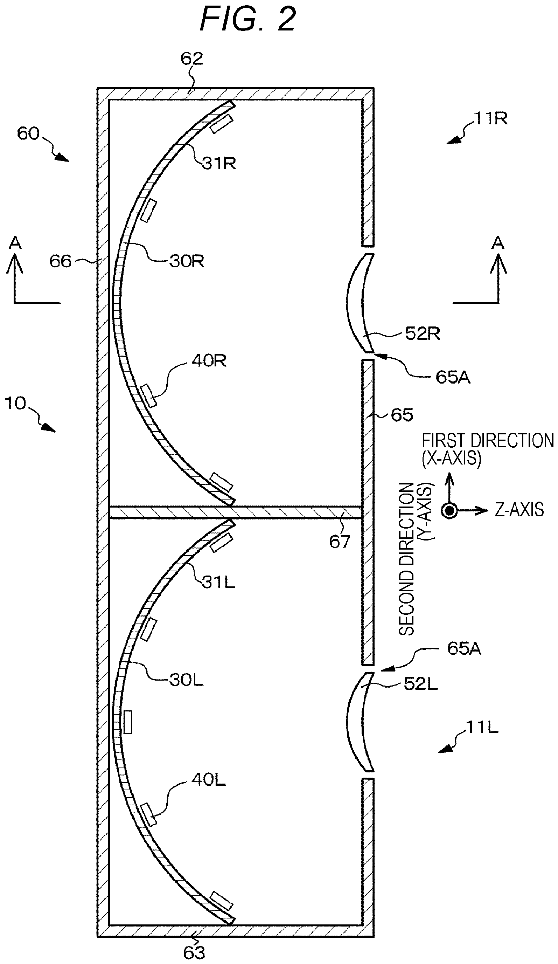

Example 1 relates to the image display device according to the first aspect of the present disclosure and the display device according to the first aspect of the present disclosure. Fig. 1A shows a conceptual diagram of the image display device of Example 1, Fig. 1B shows a conceptual diagram of the light-reflecting element constituting the image display device of Example 1, and Fig. 2 shows a conceptual diagram of the display device of Example 1. Note that Figs. 1A, 1B, and 2, or Figs. 4, 5, 6, and 9, which will be described later, basically show cross sections of the individual constituent elements; however, some of the constituent elements are not hatched. Further, Fig. 1A corresponds to a schematic sectional view taken along the arrow A-A of Fig. 2, and Fig. 2 corresponds to a schematic sectional view taken along the arrow B-B of Fig. 1A. That is, Fig. 1A corresponds to a schematic sectional view in a virtual plane parallel to the YZ-plane, and Fig. 2 corresponds to a schematic sectional view in a virtual plane parallel to the XZ-plane.

An image display device 11 of Example 1 includes an image forming device 20 and a light-reflecting member 30, and a plurality of light-reflecting elements 40 is provided on a facing surface 31, of the light-reflecting member 30, facing an observer in a first direction and a second direction different from the first direction. Then, light constituting a minute region of an image emitted from the image forming device 20 enters the light-reflecting element 40 and is emitted from the light-reflecting element 40 toward a pupil 12 of the observer.

Further, a display device 10 of Example 1 is

a display device including a first image display device 11R and a second image display device 11L that are worn on the head of the observer,
the first image display device 11R includes a first image forming device 20R and a first light-reflecting member 30R,
a plurality of first light-reflecting elements 40R is provided on a facing surface 31R of the first light-reflecting member 30R facing the observer in the first direction and the second direction different from the first direction,
the second image display device 11L includes a second image forming device 20L and a second light-reflecting member 30L,
a plurality of second light-reflecting elements 40L is provided on a facing surface 31L of the second light-reflecting member 30L facing the observer in the first direction and the second direction different from the first direction,
light constituting the minute region of the image emitted from the first image forming device 20R enters the first light-reflecting element 40R and is emitted from the first light-reflecting element 40R toward one (the right eye) pupil of the observer, and
light constituting the minute region of the image emitted from the second image forming device 20L enters the second light-reflecting element 40L and is emitted from the second light-reflecting element 40L toward the other (the left eye) pupil of the observer. The first image display device 11R and the second image display device 11L are arranged symmetrically with respect to the YZ-plane. In Fig. 2, the first image forming device 20R is disposed above second optical means 52R, and the second image forming device 20L is disposed above second optical means 52L.

Note that, in the following description, for simplicity of explanation, reference numerals of the image display device, the first image display device, and the second image display device, and various elements constituting these image display devices are collectively denoted by a suffix "S" after the reference numerals. For example, the image display device 11, the first image display device 11R, and the second image display device 11L are collectively referred to as an image display device $11_S$.

Further, in the light-reflecting member 30 of Example 1 made from a plastic material or a carbon-based material,

the plurality of light-reflecting elements 40 is provided on the facing surface 31 facing the observer in the first direction and the second direction different from the first direction, and
the minute region of the image emitted from the image forming device 20 enters the light-reflecting element 40 and is emitted from the light-reflecting element 40 toward the pupil 12 of the observer.

Then, the image display device 11 is housed in a housing 60. Alternatively, the first image display device 11R and the second image display device 11L are housed in the housing 60, and a partition plate 67 is disposed between a region of the housing 60 in which the first image display device 11R is housed and a region of the housing 60 in which the second image display device 11L is housed. On the inner surface of the housing 60 including the partition plate 67, an anti-reflection member (not shown) made from vantablack (carbon nanotubebased material) is disposed. The housing 60 includes, with respect to the observer, a top surface member 61, a first side member 62 (positioned on the right ear side of the observer), a second side member 63 (positioned on the left ear side of the observer), a lower surface member 64, a facing surface member 65 that faces the observer and has an opening portion 65A, and a front member 66 that faces the facing surface member 65, and these members are integrally assembled. The first light-reflecting member 30R for the first image display device and the second light-reflecting member 30L for the second image display device are attached to the front member 66. The second optical means 52R for the first image display device and the second optical means 52L for the second image display device are attached to the facing surface member 65. Further, the first image forming device 20R and the first optical means 51R for the first image display device and the second image forming device 20L and the first optical means 51L for the second image display device are attached to the top surface member 61, the side members 62 and 63, or the facing surface member 65 (in the illustrated example, at a part positioned above the second optical means 52R and 52L attached to the facing surface member 65). The image display device $11_s$ (specifically, the housing 60) is worn on the head of the observer. Means and method for wearing the image display device and the like on the head of the observer may be well-known means and methods.

Then, in the image display device $11_s$ of Example 1, the facing surface $31_s$ of the light-reflecting member $30_s$ (the light-reflecting member $30_s$ itself in the illustrated example) is curved concavely toward the observer. Specifically, the facing surface $31_s$ of the light-reflecting member $30_s$ (the light-reflecting member $30_s$) includes a part of a spherical surface or a part of an aspherical surface. The shape of the orthographic projection image of the light-reflecting member $30_s$ is, for example, a circle, and the size of the orthographic projection image of the light-reflecting member $30_s$ is 10 mm to 100 mm, specifically 60 mm, when expressed by a radius $r_0$ when assuming a circle equal to the area of the orthographic projection image of the light-reflecting member $30_s$. In a case where the light-reflecting member $30_s$ includes a part of a spherical surface, the curvature radius of the spherical surface may be $r_0$ to $3r_0$, specifically 30 mm, and in a case where the light-reflecting member $30_s$ includes a part of an aspherical surface, the curvature radius at the center of the light-reflecting member $30_s$ may be $r_0$ to $3r_0$, specifically 30 mm.

In accordance with the present invention, the light-reflecting element $40_s$ includes a columnar member 41 through which light constituting the minute region of the image emitted from the image forming device $20_s$ enters and is emitted, and a material (the second material) 42 having a refractive index lower than that of a material (the first material) constituting the columnar member 41 is filled between the light-reflecting element $40_s$ and the light-reflecting element $40_s$. Specifically, the first material includes, for example, ZEONEX resin having a refractive index $n_1 = 1.53$, and the second material 42 is air. A light-reflecting layer 32 made from silver, aluminum, barium sulfate paint, or the like is formed on the bottom surface of the columnar member 41. The cross-sectional shape when the columnar member 41 is cut along a virtual plane orthogonal to the axis of the columnar member 41 is a regular hexagon (the length of one side is 5 pm), and the minimum interval between the light-reflecting element $40_s$ and the light-reflecting element $40_s$ is 1 um; however, the shape and the value are not limited thereto. When the light constituting the minute region of the image emitted from the image forming device $20_s$ enters the columnar member 41, the light (incident light) is reflected by the side surface and the bottom surface of the columnar member 41, and is emitted as emitted light from the columnar member 41 toward the pupil 12 of the observer. When the light emitted from the image forming device $20_s$ enters the light-reflecting element $40_s$ and is emitted from the light-reflecting element $40_s$, the sign of the incident vector ($k^v_{in}$) of the light entering the light-reflecting element $40_s$ and the sign of the emission vector ($k^v_{out}$) of the light emitted from the light-reflecting element $40_s$ are opposite to each other. That is,

$$k^v_{in} + k^v_{out} = 0$$

is satisfied. As a result, the light constituting the minute region of the image emitted from the image forming device $20_s$ enters the light-reflecting element $40_s$, and is reliably emitted from the light-reflecting element $40_s$ toward the pupil 12 of the observer. Examples of a method for forming the columnar member 41 on the facing surface $31_s$ of the light-reflecting member $30_s$ include a nanoimprint method. Note that, in Figs. 1A and 2, the five light-reflecting elements $40_s$ are schematically illustrated as small reflecting mirrors; however, actually, the light-reflecting elements $40_s$ are formed in the entire region of the facing surface $31_s$ of the light-reflecting member $30_s$.

In the image display device $11_s$ of Example 1, a first optical means $51_s$ including a convex lens for enlarging an image emitted from the image forming device $20_s$ is disposed between the image forming device $20_s$ and the light-reflecting member $30_s$. Further, a second optical means $52_s$ including a convex lens for converging the light emitted from the light-reflecting member $30_s$ on the pupil 12 of the observer is disposed between the light-reflecting member $30_s$

and the observer. Alternatively, the first optical means $51_s$ may be a so-called f$\theta$ fish-eye lens system. Further, it is desirable to satisfy the relationship

$$ss' = a(f' \cdot \lambda)^{1/2},$$

and thereby, which makes it easy to achieve focus even on the light-reflecting member $30_s$ having a curved shape and to relax the restriction on the shape of the light-reflecting member $30_s$, thereby making it easy to reduce the size of the first optical means $51_s$, for example.

Further, in the image display device $11_s$ of Example 1, the image emitted from the image forming device $20_s$ is projected on the entire facing surface of the light-reflecting member $30_s$. With such an arrangement, an observer who observes the image emitted from the image forming device $20_s$ cannot visually recognize a kind of frame-like region surrounding the image, a frameless state is achieved, and the observer can view the image with high realistic feeling.

The image forming device $20_s$ includes the image forming device having the first configuration, and includes a plurality of pixels arrayed in a two-dimensional matrix. Specifically, the image forming device $20_s$ includes a projector for displaying three primary colors, has little viewing angle dependence, and is a self-luminous image forming device, and thus can achieve high contrast.

As the size (length $Lg_0$) of the light-reflecting element $40_s$, 1 um to 0.1 mm, specifically, 8.1 um can be exemplified. Further, in a case where the relationship between the total number of light-reflecting elements $40_s$ and the number of pixels of the image forming device $20_s$ is expressed as

$$(\text{total number of light-reflecting elements } 40_s) = K \times (\text{the number of pixels of the image forming device } 20_s),$$

the value of K can be exemplified as 0.1 to 10, and an area occupied by the light-reflecting element $40_s$ per 1 cm$^2$ of the light-reflecting member $30_s$ can be specifically exemplified as 0.83 cm$^2$. The light constituting the minute region of the image emitted from the image forming device $20_s$ enters the light-reflecting element $40_s$, and the minute region of the image corresponds to a sub-pixel. For example, an image having a size about ten times as large as that of the image emitted from the image forming device $20_s$ is projected on the light-reflecting member $30_s$. Alternatively, the light-reflecting element may partially include a light-reflecting element and partially include a light absorbing element.

The image display device of Example 1 includes the image forming device (or the first image forming device and the second image forming device) and the light-reflecting member for enlarging/projecting the image emitted from the image forming device (or the first light-reflecting member and the second light-reflecting member), and therefore, the image forming device (or the first image forming device and the second image forming device) can be made smaller than that of the conventional technologies, and it is possible to provide an image display device that can be manufactured inexpensively and a display device using the image display device. Moreover, in the light-reflecting member of Example 1, since the plurality of light-reflecting elements is provided on the facing surface of the light-reflecting member facing the observer, the image emitted from the image forming device can reliably reach the pupil of the observer.

The light emitted from the image forming device travels toward the light-reflecting member and further travels toward the pupil of the observer via the second optical means; however, in some case, the light collides with a region other than the light-reflecting member, for example, the inner surface of the housing. Since the anti-reflection member is disposed on the inner surface of the housing, the light reflected by the inner surface of the housing is slight. Therefore, in a case where no light-reflecting element is provided, the light that has collided with the light-reflecting member directly collides with the light-reflecting member again, thereby causing a kind of halation. Furthermore, there may also be light that is reflected from the surface of the second optical means, returned to the light-reflecting member, and collides with the light-reflecting member. Further, there may be light that is reflected by the sclera (white part of the eye) of the observer, returned to the light-reflecting member, and collides with the light-reflecting member. Such light is a kind of stray light, and when such stray light reaches the pupil of the observer, it causes reduction in contrast of an image reaching the pupil of the observer. That is, even in a case where a kind of stray light is generated due to such light emitted from the image forming device and collides with the light-reflecting member, since the light-reflecting element is provided in the image forming device of Example 1, it is possible to reliably prevent the stray light from reaching the pupil of the observer. Therefore, it is possible to suppress the occurrence of reduction in contrast of the image reaching the pupil of the observer, improve the light use efficiency, improve the luminance, and reduce the power consumption.

Example 2

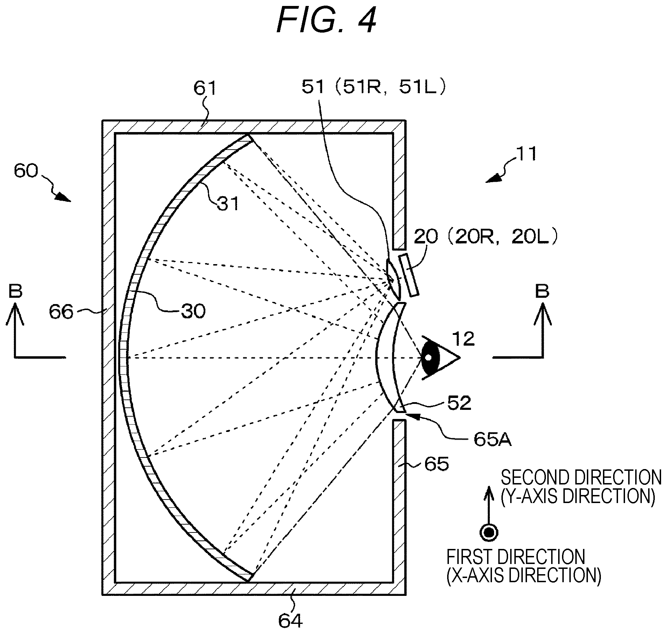

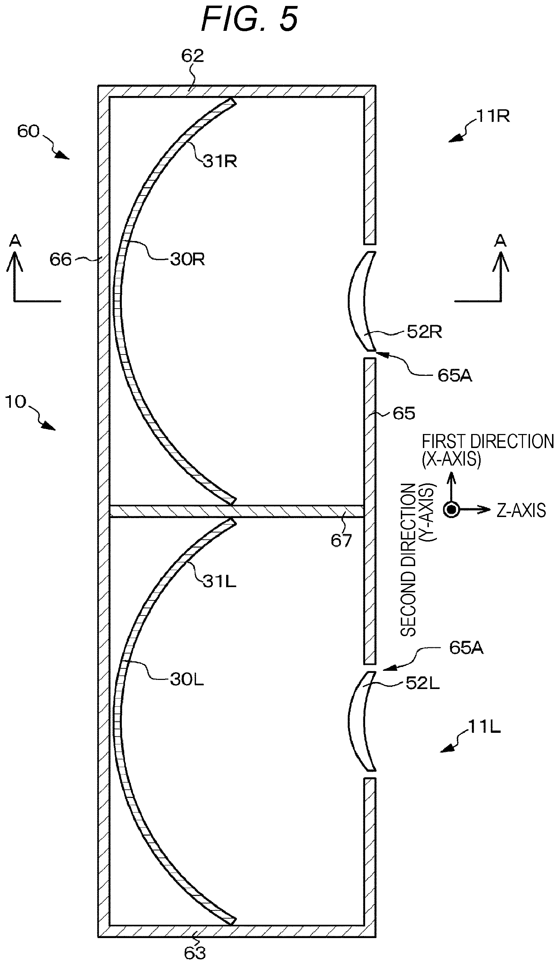

Example 2 relates to the image display device according to the second aspect of the present disclosure and the display device according to the second aspect of the present disclosure. Fig. 4 shows a conceptual diagram of the image display device of Example 2 and Fig. 5 shows a conceptual diagram of the display device of Example 2. Fig. 4 corresponds to a schematic sectional view taken along the arrow A-A of Fig. 5, and Fig. 5 corresponds to a schematic sectional view taken along the arrow B-B of Fig. 4. That is, Fig. 4 corresponds to a schematic sectional view in a virtual plane parallel to the YZ-plane, and Fig. 5 corresponds to a schematic sectional view in a virtual plane parallel to the XZ-plane.

The image display device 11 of Example 2 includes the image forming device 20 and the light-reflecting member 30,

the light-reflecting member 30 is curved, and
an image emitted from the image forming device 20 is reflected by the light-reflecting member 30 and reaches the pupil 12 of an observer.

Further, the display device of Example 2 is

a display device including the first image display device 11R and the second image display device 11L that are worn on the head of the observer,
the first image display device 11R includes the first image forming device 20R and the first light-reflecting member 30R,
the second image display device 11L includes the second image forming device 20L and the second light-reflecting member 30L,
the first light-reflecting member 30R is curved,
the image emitted from the first image forming device 20R is reflected by the first light-reflecting member 30R and reaches one (the right eye) pupil of the observer,
the second light-reflecting member 30L is curved, and
the image emitted from the second image forming device 20L is reflected by the second light-reflecting member 30L and reaches the other (the left eye) pupil of the observer. In Fig. 5, the first image forming device 20R is disposed above the second optical means 52R, and the second image forming device 20L is disposed above the second optical means 52L.

In the image display device $11_s$ of Example 2, the light-reflecting member $30_s$ is curved concavely toward the observer. The curved state of the facing surface $31_s$ of the light-reflecting member $30_s$ is similar to that described in Example 1.

The image display device $11_s$ of Example 2 has configuration and structure substantially similar to those of the image display device $11_s$ described in Example 1, except that the image display device $11_s$ of Example 2 does not include a light-reflecting element. Therefore, the detailed description is omitted.

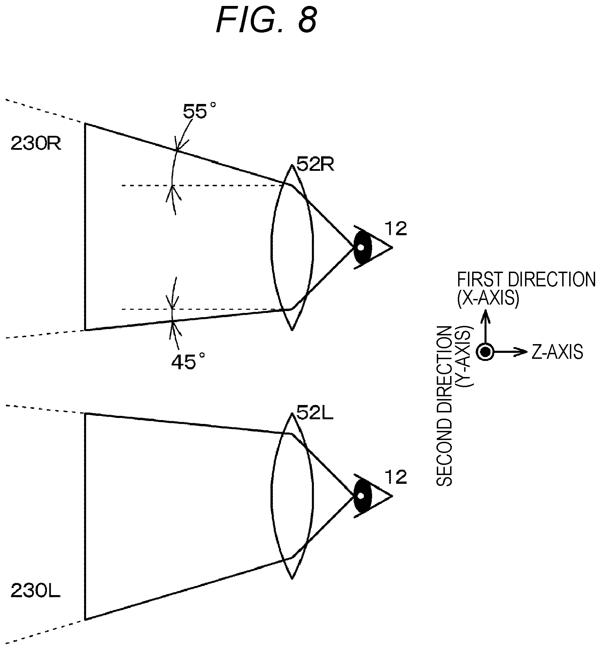

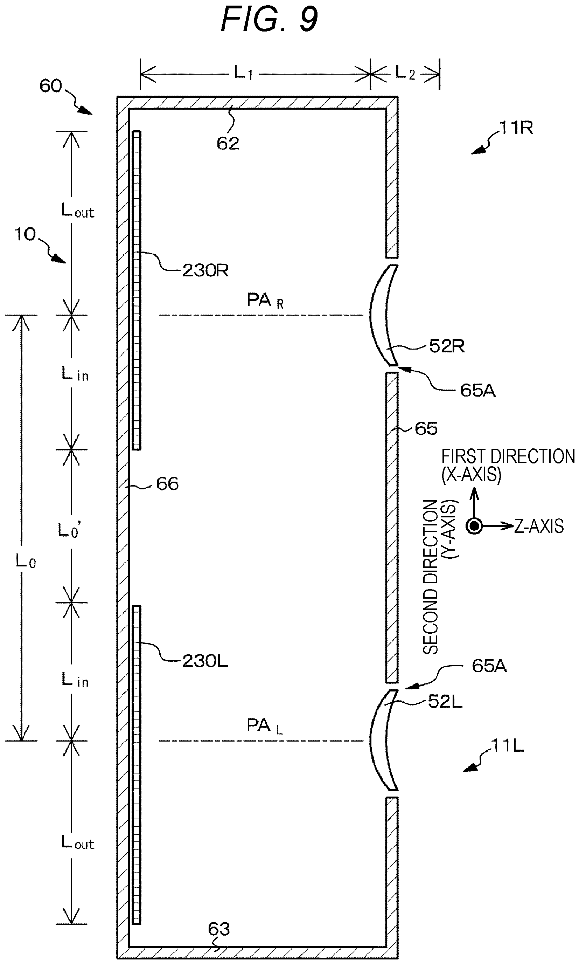

In the meantime, in the conventional display device, in a case where the first light-reflecting member 230R and the second light-reflecting member 230L are formed by using flat members, the first light-reflecting member 230R and the second light-reflecting member 230L need to be spaced apart from each other as shown in the conceptual diagrams of Figs. 8 and 9. For example, in a case where the pupil center line of the right eye is denoted by $PA_R$ and the pupil center line of the left eye is denoted by $PA_L$, a distance $L_0$ between $PA_R$ and $PA_L$ is 60 mm. Further, in a case where a distance from a point of the first light-reflecting member 230R with which the $PA_R$ collides to an end on the right ear side of the first light-reflecting member 230R and a distance from a point of the second light-reflecting member 230L with which the $PA_L$ collides to an end on the left ear side of the second light-reflecting member 230L are denoted by $L_{out}$, and a distance from a point of the first light-reflecting member 230R with which the $PA_R$ collides to an end on the nose side of the first light-reflecting member 230R and a distance from a point of the second light-reflecting member 230L with which the $PA_L$ collides to an end on the nose side of the second light-reflecting member 230L are denoted by $L_{in}$, this shall be as follows. Accordingly, the distance $L_0$' between the end on the nose side of the first light-reflecting member 230R and the end on the nose side of the second light-reflecting member 230L is as follows. Further, the distance $L_1$ between the first light-reflecting member 230R as well as the second light-reflecting member 230L and the second optical means 52R and 52L, and the distance $L_2$ between the second optical means 52R and 52L and the pupil 21 of the observer are as follows.

$$L_0 = 60 \text{ mm}$$

$$L_{out} = 30 \; mm$$

$$L_{in} = 20 \; mm$$

$$L_0' = 20 \; mm$$

$$L_1 = 50 \; mm$$

$$L_2 = 15 \; mm$$

Under such conditions, as shown in the conceptual diagram of Fig. 8, in a virtual plane parallel to the XZ-plane, the observer can view only an image within a range of 45° on the nose side and an image within a range of 55° on the ear side with respect to $PA_R$ and $PA_L$. Therefore, in particular, an image which is displayed on the nose side and appears to be present at a position close to the observer is difficult for the observer to visually recognize, or, alternatively, cannot be visually recognized. Further, there is a difference between the range of the image on the nose side viewed by the right eye and the range of the image on the ear side viewed by the left eye, and there is a difference between the range of the image on the nose side viewed by the left eye and the range of the image on the ear side viewed by the right eye. Field of view (FOV), called field of view or viewing angle also, the largest region visible through a lens) under these conditions is 100°.

On the other hand, in Example 2 or Example 1, the parameters in the above-described conventional display device can be changed as follows.

$$L_0 = 60 \; mm$$

$$L_{out} = 30 \; mm$$

$$L_{in} = 30 \; mm$$

$$L_0' = 0 \; mm$$

$$L_1 = 40 \; mm$$

$$L_2 = 15 \; mm$$

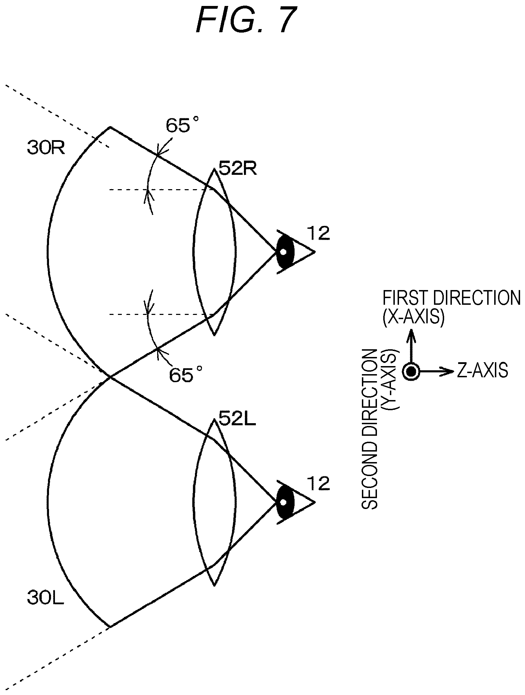

Under such conditions, as shown in the conceptual diagram of Fig. 7, in a virtual plane parallel to the XZ-plane, the observer can view an image within a range of 65° on the nose side and an image within a range of 65° on the ear side with respect to $PA_R$ and $PA_L$. That is, the observer can easily and reliably recognize visually the image which is displayed on the nose side and appears to be present at a position close to the observer. Further, there is no difference between the range of the image on the nose side viewed by the right eye and the range of the image on the ear side viewed by the left eye, and there is no difference between the range of the image on the nose side viewed by the left eye and the range of the image on the ear side viewed by the right eye. Moreover, the FOV under these conditions is 130°.

As described above, in the image display device or the display device of Example 2 or Example 1, since the light-reflecting member (or the first light-reflecting member and the second light-reflecting member) is curved, it is possible to provide an image display device or a display device having a configuration and structure in which a difference is less likely to occur between the range of an image viewed by the right eye and the range of an image viewed by the left eye. Moreover, the observer can easily and reliably recognize visually the image which is displayed on the nose side and appears to be present at a position close to the observer, and the FOV can be enlarged.

Although the image display device or the display device of the present disclosure has been described on the basis of the preferred examples, the image display device or the display device of the present disclosure is not limited to these examples. The configuration and structure of the image display device or the display device described in the examples are exemplifications and can be appropriately changed, and the materials used to manufacture the image display device or the display device are also exemplifications and can be appropriately changed. The concept of the light-reflecting element of the present disclosure also includes a concept of the light diffusion element.

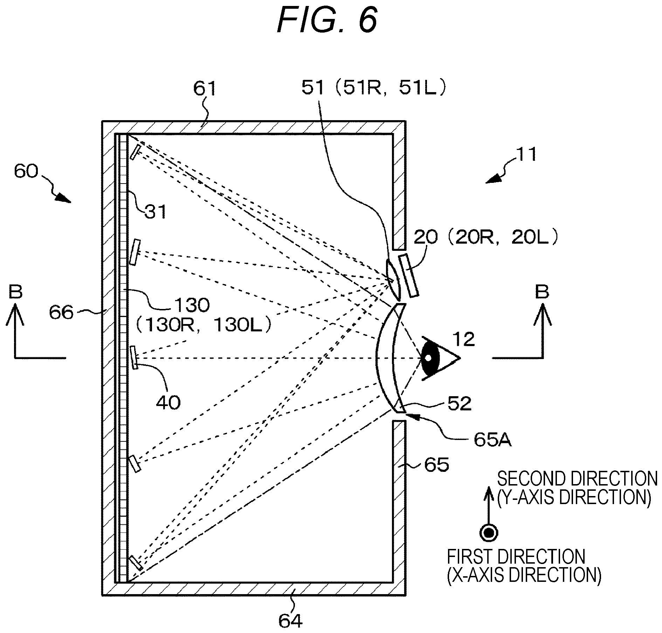

In some cases, in Example 1, the light-reflecting member and the like may include a flat member. Alternatively, as shown in the conceptual diagram of the image display device in Fig. 6, in Example 1 or Example 2 (note that Fig. 6 is a conceptual diagram of the image display device of Example 1), the facing surface $31_s$ of the light-reflecting member $130_s$ may include a part of a cylindrical surface. A schematic sectional view taken along the arrow B-B of Fig. 6 is similar to Fig. 2. In the case where the light-reflecting member $130_s$ includes a part of the cylindrical surface, the distance $D_1$ from the axis of rotation extending in the Y-axis direction to another line segment or curve may be $r_0$ to $3r_0$, specifically, 30 mm. The shape of the orthographic projection image of the light-reflecting member $130_s$ may be a rectangle, and the size of the orthographic projection image of the light-reflecting member $130_s$ may be, for example, 10 mm to 100 mm along the first direction, specifically 30 mm, and may be, for example, 10 mm to 100 mm along the second direction, specifically 30 mm.

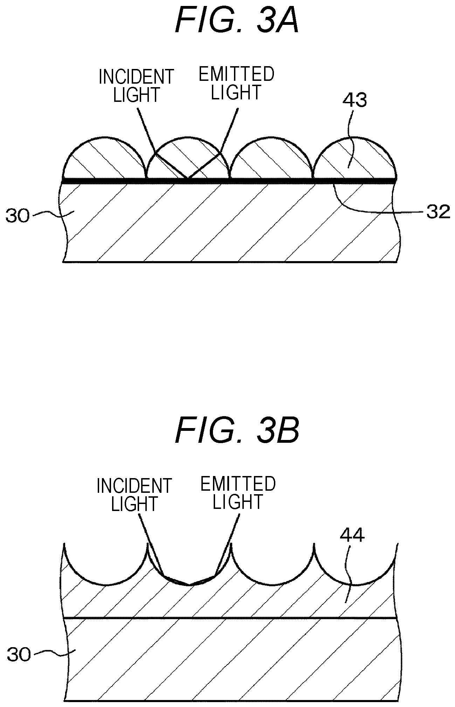

Alternatively, in the image display device $11_s$ according to the first aspect of the present disclosure including the above-described preferable arrangement, as shown in Fig. 3A which is a conceptual diagram of a modification to the light-reflecting element of the image display device of Example 1, not covered by the present invention, the light-reflecting element $40_s$ may be constituted by a smooth convex portion 43 through which the light constituting the minute region of the image emitted from the image forming device $20_s$ enters and is emitted. Alternatively, as shown in Fig. 3B, which is a conceptual diagram of a modification to the light-reflecting element of the image display device of Example 1, not covered by the present invention, the light-reflecting element $40_s$ may be constituted by a smooth concave portion 44 from which the light constituting the minute region of the image emitted from the image forming device $20_s$ is reflected. The shape when the convex portion 43 or the concave portion 44 is cut along a virtual plane including the axis of the convex portion 43 or the concave portion 44 is, for example, a part of a circle (arc); however, the shape is not limited to such a shape. When the light constituting the minute region of the image emitted from the image forming device $20_s$ enters the convex portion 43 or the concave portion 44, the light (incident light) is reflected by the bottom surface of the convex portion 43 or the concave portion 44, and is emitted and reflected as emitted light from the convex portion 43 or the concave portion 44 toward the pupil 12 of the observer. It is only required that the specific shape of the convex portion 43 or the concave portion 44 is a shape which enables such incident light and emitted light to be obtained. The light-reflecting layer 32 is preferably formed on the bottom surface of the convex portion 43. As a method for producing the convex portion 43 or the concave portion 44, or, alternatively, as a method for forming the convex portion 43 or the concave portion 44 on the facing surface $31_s$ of the light-reflecting member $30_s$, a nanoimprint method can be exemplified. The light-reflecting member $30_s$ having the convex portion 43 or the concave portion 44 may also be called a kind of Fresnel screen.

In a case where the outer shape of a pixel in the image forming device is the same as the outer shape of the light-reflecting element, it is preferable to take measures against moiré (interference fringes). The regularly arranged halftone dots (the pixels of the image forming device and the light-reflecting elements) may interfere with each other to generate a stripe pattern (moiré). That is, in a case where the pixel pitch in the image forming device and the arrangement pitch of the light-reflecting elements periodically overlap, moiré occurs. In order to suppress the occurrence of moiré, it is only required that the shape of the light-reflecting element is designed so as to reduce the interference fringes, or that the light-reflecting element is appropriately rotated and arranged.

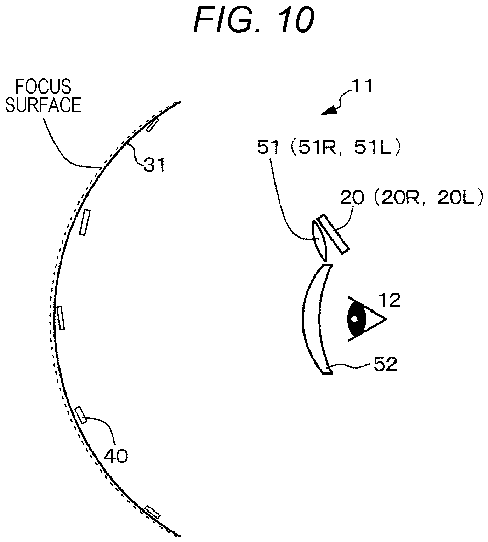

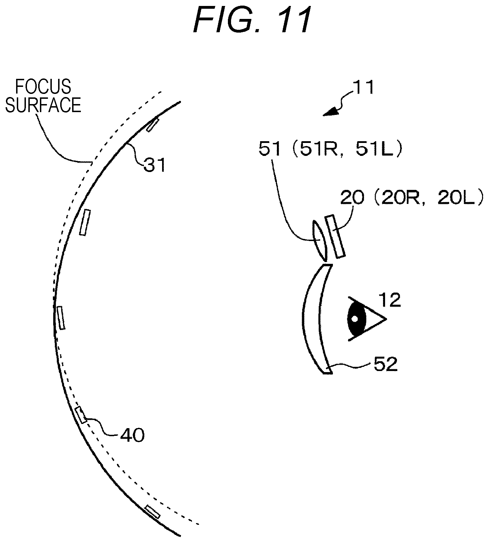

In addition, it is preferable that the first optical means $51_s$ and the image forming device $20_s$ are arranged in a non-parallel state, that is, the optical axis of the first optical means $51_s$ and the direction of light emitted from the center of the image forming device $20_s$ are in a non-parallel state, from the viewpoint that the light emitted from the first optical means $51_s$ easily forms an image on the light-reflecting element $40_s$. As shown in the conceptual diagram of Fig 11, in a case where the first optical means $51_s$ and the image forming device $20_s$ are arranged in a mutually parallel state, it may be difficult for the light emitted from the first optical means $51_s$ to form an image on the light-reflecting element $40_s$. On the other hand, as shown in the conceptual diagram of Fig. 10, in a case where the first optical means $51_s$ and the image forming device $20_s$ are arranged in a mutually non-parallel state by using the Scheimpflug principle, the light emitted from the first optical means $51_s$ easily forms an image on the light-reflecting element $40_s$. Note that, in Figs. 10 and 11, the focus plane is indicated by a dotted line. However, in Fig. 10, the focus surface indicated by the dotted line and the facing surface 31 overlap actually.

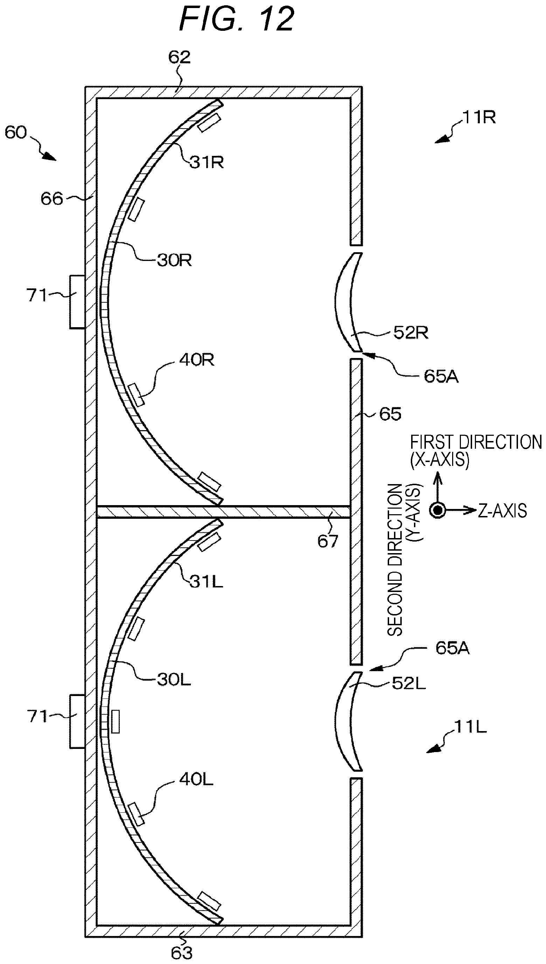

Furthermore, as shown in the conceptual diagram of Fig. 12, the image display device $11_s$ may include an imaging device 71 having an optical system of the same type as the lens system of the first optical means $51_s$. Accordingly, an image captured by the imaging device 71 can be displayed on the image forming device $20_s$. In other words, the captured image can be reproduced by the image forming device $20_s$ as it is. Note that Fig. 12 is a conceptual diagram similar to Fig. 2. Specifically, the imaging device 71 is attached to the outer surface of the front member 66 of the housing 60. For example, in a case where the first optical means $51_s$ is constituted by an fθ fish-eye lens system, it is preferable that the optical system (lens system) of the imaging device 71 is also constituted by an fθ fish-eye lens system.

REFERENCE SIGNS LIST

10 Display device

11, 11R, 11L, $11_s$ Image display device

12 Pupil of observer

20, 20R, 20L, $20_s$ Image forming device

30, 30R, 30L, $30_s$, $130_s$ Light-reflecting member

31, 31R, 31L, $31_s$ Facing surface of light-reflecting member

40, 40R, 40L, $40_s$ Light-reflecting element

41 Columnar member

42 Second material

43 Convex portion

44 Concave portion

51R, 51L, $51_s$ First optical means

52R, 52L, $52_s$ Second optical means

60 Housing

61 Top surface member of housing

62 First side member of housing

63 Second side member of housing

64 Lower surface member of housing

65 Facing surface member of housing

65A Opening portion

66 Front member of housing

67 Partition plate

71 Imaging device

**Claims**

1.  A light-reflecting member (30) comprising:

a plurality of light-reflecting elements (40) provided on a facing surface (31) facing an observer in both a first direction and a second direction different from the first direction, wherein the light reflecting elements are arranged such that a minute region of an image emitted from an image forming device (20) enters the light-reflecting elements and is emitted from the light-reflecting elements toward a pupil of the observer; wherein

each light-reflecting element includes a columnar member (41) through which the light constituting the minute region of the image emitted from the image forming device enters, is reflected and is emitted, and

a material (42) having a refractive index lower than a refractive index of a material constituting the columnar member is filled between the columnar members of adjacent light-reflecting elements.

2. An image display device (11) comprising:
an image forming device; and a light-reflecting member according to claim 1.

3. The image display device according to claim 1, wherein the facing surface of the light-reflecting member is curved concavely toward the observer.

4. The image display device according to claim 3, wherein the facing surface of the light-reflecting member includes a part of a spherical surface, a part of an aspherical surface, or a part of a cylindrical surface.

5. The image display device according to any of claims 2 to 3, wherein first optical means for enlarging the image emitted from the image forming device is disposed between the image forming device and the light-reflecting member.

6. The image display device according to claim 5, wherein the first optical means and the image forming device are arranged in a mutually non-parallel state.

7. The image display device according to any of claims 5 and 6, wherein the first optical means includes an fθ fish-eye lens system.

8. The image display device according to any of claims 2 to 7, wherein second optical means for converging light emitted from the light-reflecting member on the pupil of the observer is disposed between the light-reflecting member and the observer.

9. The image display device according to any of claims 2 to 8, wherein the image emitted from the image forming device is projected on an entire facing surface of the light-reflecting member.

10. The image display device according to any of claims 2 to 9, 10, wherein, when the light emitted from the image forming device enters the light-reflecting element and is emitted from the light-reflecting element, a sign of a vector of the light entering the light-reflecting element, $k^V_{in}$, is opposite to a sign of a vector of the light emitted from the light-reflecting element, $k^V_{out}$, such that $k^V_{in} + k^V_{out} = 0$ is satisfied.

11. A display device comprising: an image display device according to claim 2, the image display device being a first image display device, the image forming device being a first image forming device and the light-reflecting member being a first light-reflecting member; and a second image display device, the first and second image display devices being worn on a head of an observer, wherein

the second image display device includes a second image forming device and a second light-reflecting member, a plurality of second light-reflecting elements is provided on a facing surface of the second light-reflecting member facing the observer in both the first direction and the second direction different from the first direction, light constituting a minute region of an image emitted from the first image forming device enters the first light-reflecting elements and is emitted from the first light-reflecting elements toward one pupil of the observer, and light constituting a minute region of an image emitted from the second image forming device enters the second light-reflecting elements and is emitted from the second light-reflecting elements toward another pupil of the observer; wherein each second light-reflecting element includes a columnar member through which the light constituting the minute region of the image emitted from the second image forming device enters, is reflected and is emitted, and a material having a refractive index lower than a refractive index of a material constituting the columnar member is filled between the columnar members of adjacent second light-reflecting elements.

**Patentansprüche**

1. Lichtreflexionsbauteil (30), das Folgendes umfasst:

   mehrere Lichtreflexionselemente (40), die auf einer zugewandten Oberfläche (31) bereitgestellt sind, die einem Beobachter in sowohl einer ersten Richtung als auch einer von der ersten Richtung verschiedenen zweiten Richtung zugewandt sind, wobei
   die Lichtreflexionselemente derart angeordnet sind, dass ein winziges Gebiet eines Bildes, das von einer Bildbildungsvorrichtung (20) emittiert wird, in die Lichtreflexionselemente eintritt und von den Lichtreflexionselementen zu einer Pupille des Beobachters hin emittiert wird; wobei
   jedes Lichtreflexionselement ein säulenartiges Bauteil (41) beinhaltet, durch das das Licht, das das winzige Gebiet des Bildes darstellt, das von der Bildbildungsvorrichtung emittiert wird, eintritt, reflektiert wird und emittiert wird, und
   ein Material (42) mit einem Brechungsindex niedriger als ein Brechungsindex eines Materials, das das säulenartige Bauteil darstellt, zwischen den säulenartigen Bauteilen angrenzender Lichtreflexionselemente eingefüllt ist.

2. Bildanzeigevorrichtung (11), die Folgendes umfasst: eine Bildbildungsvorrichtung; und ein Lichtreflexionsbauteil nach Anspruch 1.

3. Bildanzeigevorrichtung nach Anspruch 1, wobei die zugewandte Oberfläche des Lichtreflexionsbauteils konkav zu dem Beobachter hin gekrümmt ist.

4. Bildanzeigevorrichtung nach Anspruch 3, wobei die zugewandte Oberfläche des Lichtreflexionsbauteils einen Teil einer sphärischen Oberfläche, einen Teil einer asphärischen Oberfläche oder einen Teil einer zylindrischen Oberfläche beinhaltet.

5. Bildanzeigevorrichtung nach einem der Ansprüche 2 bis 3, wobei ein erstes optisches Mittel zum Vergrößern des Bildes, das von der Bildbildungsvorrichtung emittiert wird, zwischen der Bildbildungsvorrichtung und dem Lichtreflexionsbauteil angeordnet ist.

6. Bildanzeigevorrichtung nach Anspruch 5, wobei das erste optische Mittel und die Bildbildungsvorrichtung in einem jeweils nichtparallelen Zustand angeordnet sind.

7. Bildanzeigevorrichtung nach einem der Ansprüche 5 und 6, wobei das erste optische Mittel ein fθ-Fischaugenlinsensystem beinhaltet.

8. Bildanzeigevorrichtung nach einem der Ansprüche 2 bis 7, wobei ein zweites optisches Mittel zum Konvergieren von Licht, das von dem Lichtreflexionsbauteil emittiert wird, auf der Pupille des Beobachters zwischen dem Lichtreflexionsbauteil und dem Beobachter angeordnet ist.

9. Bildanzeigevorrichtung nach einem der Ansprüche 2 bis 8, wobei das Bild, das von der Bildbildungsvorrichtung emittiert wird, auf eine gesamte zugewandte Oberfläche des Lichtreflexionsbauteils projiziert wird.

10. Bildanzeigevorrichtung nach einem der Ansprüche 2 bis 9, wobei, wenn das Licht, das von der Bildbildungsvorrichtung emittiert wird, in das Lichtreflexionsbauteil eintritt und von dem Lichtreflexionsbauteil emittiert wird, ein Vorzeichen eines Vektors des Lichts, das in das Lichtreflexionsbauteil eintritt, $k^V_{in}$, entgegengesetzt zu einem Vorzeichen eines Vektors des Lichts, das von dem Lichtreflexionsbauteil emittiert wird, $k^V_{out}$, ist, so dass $k^V_{in} + k^V_{out} = 0$ erfüllt wird.

11. Anzeigevorrichtung, die Folgendes umfasst: eine Bildanzeigevorrichtung nach Anspruch 2, wobei die Bildanzeigevorrichtung eine erste Bildanzeigevorrichtung ist, wobei die Bildbildungsvorrichtung eine erste Bildbildungsvorrichtung ist und wobei das Lichtreflexionsbauteil ein erstes Lichtreflexionsbauteil ist; und eine zweite Bildanzeigevorrichtung, wobei die erste und zweite Bildanzeigevorrichtung auf einem Kopf eines Beobachters getragen werden, wobei

   die zweite Bildanzeigevorrichtung eine zweite Bildbildungsvorrichtung und ein zweites Lichtreflexionsbauteil beinhaltet,
   mehrere zweite Lichtreflexionselemente auf einer zugewandten Oberfläche des zweiten Lichtreflexionsbauteils bereitgestellt sind, die dem Beobachter in sowohl der ersten Richtung als auch der von der ersten Richtung verschiedenen zweiten Richtung zugewandt ist,

Licht, das ein winziges Gebiet eines Bildes darstellt, das von der ersten Bildbildungsvorrichtung emittiert wird, in die ersten Lichtreflexionselemente eintritt und von den ersten Lichtreflexionselementen zu einer Pupille des Beobachters hin emittiert wird, und

Licht, das ein winziges Gebiet eines Bildes darstellt, das von der zweiten Bildbildungsvorrichtung emittiert wird, in die zweiten Lichtreflexionselemente eintritt und von den zweiten Lichtreflexionselementen zu einer anderen Pupille des Beobachters hin emittiert wird; wobei

jedes zweite Lichtreflexionselement ein säulenartiges Bauteil beinhaltet, durch das das Licht, das das winzige Gebiet des Bildes darstellt, das von der zweiten Bildbildungsvorrichtung emittiert wird, eintritt, reflektiert wird und emittiert wird, und

ein Material mit einem Brechungsindex niedriger als ein Brechungsindex eines Materials, das das säulenartige Bauteil darstellt, zwischen den säulenartigen Bauteilen angrenzender zweiter Lichtreflexionselemente eingefüllt ist.

## Revendications

1. Élément réfléchissant la lumière (30) comprenant :

   une pluralité d'éléments réfléchissant la lumière (40) disposés sur une surface en regard (31) faisant face à un observateur à la fois dans une première direction et dans une seconde direction différente de la première direction, les éléments réfléchissant la lumière étant agencés de telle sorte qu'une région infime d'une image émise par un dispositif de formation d'image (20) pénètre dans les éléments réfléchissant la lumière et soit émise par les éléments réfléchissant la lumière en direction d'une pupille de l'observateur ;
   chaque élément réfléchissant la lumière comprenant un élément de colonne (41) à travers lequel la lumière constituant la région infime de l'image émise par le dispositif de formation d'image entre, est réfléchie et est émise, et
   un matériau (42) ayant un indice de réfraction inférieur à l'indice de réfraction d'un matériau constituant l'élément de colonne étant placé entre les éléments de colonne d'éléments réfléchissant la lumière adjacents.

2. Dispositif d'affichage d'images (11) comprenant :
   un dispositif de formation d'images ; et un élément réfléchissant la lumière selon la revendication 1.

3. Dispositif d'affichage d'images selon la revendication 1,
   la surface en regard de l'élément réfléchissant la lumière étant incurvée de manière concave vers l'observateur.

4. Dispositif d'affichage d'images selon la revendication 3,
   la surface en regard de l'élément réfléchissant la lumière comprenant une partie d'une surface sphérique, une partie d'une surface asphérique ou une partie d'une surface cylindrique.

5. Dispositif d'affichage d'images selon l'une quelconque des revendications 2 et 3, un premier moyen optique d'agrandissement de l'image émise par le dispositif de formation d'images étant disposé entre le dispositif de formation d'images et l'élément réfléchissant la lumière.

6. Dispositif d'affichage d'images selon la revendications 5,
   le premier moyen optique et le dispositif de formation d'image étant agencés dans un état mutuellement non parallèle.

7. Dispositif d'affichage d'images selon l'une quelconque des revendications 5 et 6,
   le premier moyen optique comprenant un système de lentille de type œil de poisson fθ.

8. Dispositif d'affichage d'images selon l'une quelconque des revendications 2 à 7,
   le second moyen optique pour faire converger la lumière émise par l'élément réfléchissant la lumière sur la pupille de l'observateur étant placé entre l'élément réfléchissant la lumière et l'observateur.

9. Dispositif d'affichage d'images selon l'une quelconque des revendications 2 à 8,
   l'image émise par le dispositif de formation d'image étant projetée sur toute une surface en regard de l'élément réfléchissant la lumière.

**10.** Dispositif d'affichage d'images selon l'une quelconque des revendications 2 à 9,
lorsque la lumière émise par le dispositif de formation d'image pénètre dans l'élément réfléchissant la lumière et est émise par l'élément réfléchissant la lumière, un signe d'un vecteur de la lumière entrant dans l'élément réfléchissant la lumière, $k^v_{in}$, étant opposé à un signe d'un vecteur de la lumière émise par l'élément réfléchissant la lumière, $k^V_{out}$, de sorte que $k^v_{in} + k^V_{out} = 0$ est satisfait.

**11.** Dispositif d'affichage comprenant : un dispositif d'affichage d'images selon la revendication 2, le dispositif d'affichage d'images étant un premier dispositif d'affichage d'images, le dispositif de formation d'images étant un premier dispositif de formation d'images et l'élément réfléchissant la lumière étant un premier élément réfléchissant la lumière ; et un second dispositif d'affichage d'images, le premier et le second dispositifs d'affichage d'images étant portés sur la tête d'un observateur,

le second dispositif d'affichage d'images comprenant un second dispositif de formation d'images et un second élément réfléchissant la lumière,
une pluralité de seconds éléments réfléchissant la lumière étant fournie sur une surface en regard du second élément réfléchissant la lumière faisant face à l'observateur à la fois dans la première direction et dans la seconde direction différente de la première direction,
la lumière constituant une région infime d'une image émise par le premier dispositif de formation d'image pénétrant dans les premiers éléments réfléchissant la lumière et étant émise par les premiers éléments réfléchissant la lumière en direction d'une pupille de l'observateur, et
la lumière constituant une région infime d'une image émise par le second dispositif de formation d'image pénétrant dans les seconds éléments réfléchissant la lumière et étant émise par les seconds éléments réfléchissant la lumière en direction d'une autre pupille de l'observateur ;
chaque second élément réfléchissant la lumière comprenant un élément de colonne à travers lequel la lumière constituant la région infime de l'image émise par le second dispositif de formation d'image entre, est réfléchie et est émise, et
un matériau ayant un indice de réfraction inférieur à l'indice de réfraction d'un matériau constituant l'élément de colonne étant placé entre les éléments de colonne des seconds éléments réfléchissant la lumière adjacents.

## FIG. 1A

61 · · · 51 (51R, 51L)

60 · · ·

31 · · ·

20 (20R, 20L) · · ·

B → ← B

66 · · · 30 · · ·

12 · · ·

40 · · · 52 · · ·

65A · · ·

65 · · ·

64 · · ·

SECOND DIRECTION
(Y-AXIS DIRECTION)

FIRST DIRECTION
(X-AXIS DIRECTION)

## FIG. 1B

42 · · ·

INCIDENT LIGHT · · · EMITTED LIGHT

41 · · ·

30 · · · · · · 32

# FIG. 2

## FIG. 3A

INCIDENT LIGHT    EMITTED LIGHT    43

30    32

## FIG. 3B

INCIDENT LIGHT    EMITTED LIGHT    44

30

# FIG. 4

SECOND DIRECTION
(Y-AXIS DIRECTION)

FIRST DIRECTION
(X-AXIS DIRECTION)

# FIG. 5

FIRST DIRECTION
(X-AXIS)

Z-AXIS

SECOND DIRECTION
(Y-AXIS)

# FIG. 6

SECOND DIRECTION
(Y-AXIS DIRECTION)

FIRST DIRECTION
(X-AXIS DIRECTION)

## FIG. 7

# FIG. 8

230R

55°

52R

12

45°

52L

230L

12

FIRST DIRECTION
(X-AXIS)

SECOND DIRECTION
(Y-AXIS)

Z-AXIS

# *FIG. 9*

# FIG. 10

FOCUS
SURFACE

31

11

51 (51R, 51L)

20 (20R, 20L)

12

52

40

# FIG. 11

FOCUS
SURFACE

11

51 (51R, 51L)

20 (20R, 20L)

31

12

40

52

# FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017183763 A
- US 2017075113 A1
- US 9638836 B1
- US 8384999 B1
- WO 2008156675 A1